# EUROPEAN PATENT APPLICATION

(11) **EP 4 563 661 A1**
(43) Date of publication of application: **04.06.2025**
(21) Application number: 23846064.6
(22) Date of filing: 19.06.2023
(51) Int. Cl.: C08L 77/06, C08G 69/26, C08J 5/04, C08K 7/02

(54) **RESIN COMPOSITION AND MOLDED ARTICLE**

(30) Priority: 25.07.2022 JP 2022117988
(71) Applicant: MITSUBISHI GAS CHEMICAL COMPANY, INC., Chiyoda-ku Tokyo 100-8324 (JP)
(72) Inventor: ISHIHARA TOMITA, Eri, Hiratsuka-shi, Kanagawa 254-0016 (JP); SHIMADA NAKAMURA, Jin, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2023/022542
(87) International publication number: WO 2024/024330

(57) **Abstract**

A resin composition including from 10 to 300 parts by mass of reinforcing fibers with respect to 100 parts by mass of a xylylenediamine-based polyamide resin, the xylylenediamine-based polyamide resin containing a diamine unit and a dicarboxylic acid unit, the diamine unit containing 70 mol% or more of a structural unit derived from a xylylenediamine, the dicarboxylic acid unit containing 70 mol% or more of a structural unit derived from an α,ω-linear aliphatic dicarboxylic acid having from 11 to 20 carbon atoms, and the xylylenediamine-based polyamide resin having a relative viscosity of from 1.6 to 2.4.

## Description

### Technical Field

The present invention relates to a resin composition and a molded article. In particular, it relates to a resin composition using a polyamide resin as a major component.

### Background Art

For the purpose of reducing the weight and cost of a molded article made of a metal, a molded article made of a resin is used. In particular, a polyamide resin having excellent properties such as thermal resistance, chemical resistance, rigidity, abrasion resistance, and moldability is used in various applications.

For reasons such as improvement of fluidity of a resin composition, a low-temperature mold may be used in injection molding or the like. However, when molding is performed using a low-temperature mold, crystallization of the polyamide resin may not sufficiently proceed. To solve such an issue, Patent Document 1 discloses a resin composition containing from 80 to 150 parts by mass of an inorganic fiber, from 0.01 to 2 parts by mass of a fatty acid metal salt, and from 0.1 to 10 parts by mass of an inorganic crystal nucleating agent with respect to 100 parts by mass of a polyamide resin composed of diamine-derived structural units and dicarboxylic acid-derived structural units, in which 70 mol% or more of the diamine-derived structural units are derived from a xylylenediamine and 70 mol% or more of the dicarboxylic acid-derived structural units are derived from an aliphatic dicarboxylic acid having from 9 to 18 carbon atoms.

### Citation List

### Patent Document

Patent Document 1: JP 2022-054099 A

### Summary of Invention

### Technical Problem

The resin composition described in Patent Document 1 is a resin composition that is sufficiently crystallized even in molding using a low-temperature mold while maintaining high mechanical strength. However, in Patent Document 1, a fatty acid metal salt and an inorganic crystal nucleating agent are blended. In increasingly expanded applications of the polyamide resin composition, there is demanded a new polyamide resin composition which does not contain a fatty acid metal salt and an inorganic crystal nucleating agent as essential components.

Here, Patent Document 1 discloses a resin composition containing a polyamide resin (MP12) composed of m/p-xylylenediamine and dodecanedioic acid, glass fibers, and talc in Example 6. When the MP12 is used as in Example 6, a crystallization rate is accelerated, and improvement in molding cycle can be expected. However, as a result of further investigation by the present inventor, it has been found that when the resin composition containing the MP12 described in Example 6 is molded, appearance of the molded article may be deteriorated. In particular, depending on the application, it is required that the molding cycle is short and the appearance of the molded article is excellent.

The present invention is directed to solving such issues and providing a resin composition having a short molding cycle and being capable of providing a molded article excellent in appearance, and a molded article.

### Solution to Problem

As a result of studies conducted by the present inventor based on the issue described above, it has been found that the above-described issues can be solved by adjusting a relative viscosity of a xylylenediamine-based polyamide resin such as a polyamide resin composed of a xylylenediamine and dodecanedioic acid.

Specifically, the issues described above are solved by the following means.
<1> A resin composition, including from 10 to 300 parts by mass of reinforcing fibers with respect to 100 parts by mass of a xylylenediamine-based polyamide resin, the xylylenediamine-based polyamide resin containing a diamine unit and a dicarboxylic acid unit, the diamine unit containing 70 mol% or more of structural units derived from a xylylenediamine, the dicarboxylic acid unit containing 70 mol% or more of structural units derived from an α,ω-linear aliphatic dicarboxylic acid having from 11 to 20 carbon atoms, and
   the xylylenediamine-based polyamide resin having a relative viscosity of from 1.6 to 2.4.
<2> The resin composition according to <1>, wherein 70 mol% or more of the dicarboxylic acid unit is derived from dodecanedioic acid and/or tetradecanedioic acid.
<3> The resin composition according to <1>, wherein 70 mol% or more of the dicarboxylic acid unit is derived from dodecanedioic acid.
<4> The resin composition according to any one of <1> to <3>, wherein from 20 to 100 mol% of the diamine unit is derived from m-xylylenediamine, and from 80 to 0 mol% of the diamine unit is derived from p-xylylenediamine.
<5> The resin composition according to <1>, wherein 70 mol% or more of the dicarboxylic acid unit is derived from dodecanedioic acid and/or tetradecanedioic acid, and
   from 20 to 100 mol% of the diamine unit is derived from m-xylylenediamine, and from 80 to 0 mol% of the diamine unit is derived from p-xylylenediamine.
<6> The resin composition according to any one of <1> to <5>, wherein a difference between a terminal amino group concentration and a terminal carboxyl group concentration ( | terminal amino group concentration - terminal carboxyl group concentration | ) of the xylylenediamine-based polyamide resin is 10 µmol/g or more.
<7> A molded article formed from the resin composition according to any one of <1> to <6>.

### Advantageous Effects of Invention

The present invention has made it possible to provide a resin composition having a short molding cycle and being capable of providing a molded article excellent in appearance, and a molded article.

### Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C unless otherwise noted.

In the present specification, the number average molecular weight can be measured according to the description in paragraph 0047 of JP 2018-165298 A, the contents of which are incorporated herein, unless otherwise specified.

In the present specification, the melting point (Tm) is a value measured by differential scanning calorimetry (DSC) in accordance with ISO 11357, unless otherwise specified. Specifically, the melting point (Tm) can be measured according to the description in paragraph 0036 of WO 2016/084475, the contents of which are incorporated herein by reference.

When a measurement method described in a standard set forth in the present specification differs depending on the year, it is based on the standard as of January 1, 2022, unless otherwise stated.

A resin composition of the present embodiment contains from 10 to 300 parts by mass of reinforcing fibers with respect to 100 parts by mass of a xylylenediamine-based polyamide resin, characterized in that the xylylenediamine-based polyamide resin contains diamine units and dicarboxylic acid units, the diamine units contain 70 mol% or more of structural units derived from xylylenediamine, the dicarboxylic acid units contains 70 mol% or more of structural units derived from α,ω-linear aliphatic dicarboxylic acid having from 11 to 20 carbon atoms, and the xylylenediamine-based polyamide resin has a relative viscosity of from 1.6 to 2.4. With such a configuration, it is possible to provide a resin composition having a short molding cycle and being capable of providing a molded article excellent in appearance. That is, in the present embodiment, to shorten the molding cycle, a xylylenediamine-based polyamide resin including a structural unit derived from an α,ω-linear aliphatic dicarboxylic acid having from 11 to 20 carbon atoms is used as the polyamide resin. However, it has been found that when reinforcing fibers are blended in such a xylylenediamine-based polyamide resin, if the xylylenediamine-based polyamide resin has a high relative viscosity, the fluidity of the reinforcing fibers is poor, resulting in poor appearance of the molded article. Accordingly, in the present embodiment, it is presumed that the fluidity of the polyamide resin composition containing the reinforcing fibers can be improved to improve the appearance of the obtained molded article by using the xylylenediamine-based polyamide resin having a slightly low relative viscosity.

Furthermore, the resin composition of the present embodiment can provide a molded article having excellent mechanical strength such as flexural modulus and impact resistance. In addition, the resin composition of the present embodiment can provide a molded article that achieves at least one or more of excellent gas barrier properties, a small amount of an eluate, excellent chemical resistance, a low water absorption rate, and a high crystallization rate. These are achieved by using a predetermined xylylenediamine-based polyamide resin.

### Xylylenediamine-based Polyamide Resin

The resin composition of the present embodiment includes a xylylenediamine-based polyamide resin containing diamine units and dicarboxylic acid units, in which the diamine units contain 70 mol% or more of structural units derived from a xylylenediamine, the dicarboxylic acid units contain 70 mol% or more of structural units derived from an α,ω-linear aliphatic dicarboxylic acid having from 11 to 20 carbon atoms, and the relative viscosity thereof is from 1.6 to 2.4 (in the present specification, sometimes simply referred to as "xylylenediamine-based polyamide resin"). By using such a xylylenediamine-based polyamide resin, a resin composition having a short molding cycle and being capable of providing a molded article excellent in appearance can be obtained.

In the xylylenediamine-based polyamide resin, more preferably 75 mol% or more, still more preferably 80 mol% or more, even more preferably 90 mol% or more, even still more preferably 95 mol% or more, and particularly even more preferably 99 mol% or more of the diamine-derived structural units are derived from a xylylenediamine (preferably p-xylylenediamine and/or m-xylylenediamine).

More specifically, in the xylylenediamine, from 20 to 100 mol% of the diamine-derived structural unit is preferably a structural unit derived from m-xylylenediamine, from 50 to 100 mol% of the diamine-derived structural unit is preferably a structural unit derived from m-xylylenediamine, and it is more preferable that from 55 to 80 mol% of the diamine-derived structural unit is a structural unit derived from m-xylylenediamine, and from 45 to 20 mol% of the diamine-derived structural unit is a structural unit derived from p-xylylenediamine. When the proportion of p-xylylenediamine is 20 mol% or more, there is a tendency that the crystallization rate is increased and the impact resistance of the obtained molded article is improved. In addition, the amount of an eluate from the molded article can be reduced by reducing the proportion of m-xylylenediamine.

In the xylylenediamine-based polyamide resin, the total of the structural units derived from p-xylylenediamine and the structural units derived from m-xylylenediamine accounts for preferably 80 mol% or more, more preferably 85 mol% or more, still more preferably 90 mol% or more, even more preferably 95 mol% or more, even still more preferably 98 mol% or more, and yet even still more preferably 99 mol% or more of the diamine-derived structural units. The upper limit of the total of the structural units derived from p-xylylenediamine and the structural units derived from m-xylylenediamine is 100 mol%.

Examples of a diamine that can be used as a raw material diamine component of the xylylenediamine-based polyamide resin, other than m-xylylenediamine and p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and a diamine having an aromatic ring, such as bis(4-aminophenyl)ether, p-phenylenediamine, and bis(aminomethyl)naphthalene. One of these can be used alone, or two or more can be mixed and used.

Meanwhile, in the xylylenediamine-based polyamide resin used in the present embodiment, preferably 75 mol% or more, still more preferably 80 mol% or more, even more preferably 90 mol% or more, even still more preferably 95 mol% or more, and particularly more preferably 99 mol% or more of the dicarboxylic acid-derived structural units are derived from an α,ω-linear aliphatic dicarboxylic acid having from 11 to 20 carbon atoms (preferably an α,ω-linear aliphatic dicarboxylic acid having from 11 to 15 carbon atoms and more preferably an α,ω-linear aliphatic dicarboxylic acid having from 12 to 14 carbon atoms).

Examples of the α,ω-linear aliphatic dicarboxylic acid having from 11 to 20 carbon atoms that is preferably used as the raw material dicarboxylic acid component of the xylylenediamine-based polyamide resin used in the present embodiment include an aliphatic dicarboxylic acid, such as undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, and icosanedioic acid. One type thereof can be used, or two or more types thereof can be mixed and used. Among these, dodecanedioic acid and/or tetradecanedioic acid is preferable.

A preferred embodiment of the xylylenediamine-based polyamide resin of the present embodiment is, for example, a polyamide resin in which 70 mol% or more (preferably 80 mol% or more, more preferably 90 mol% or more, and still more preferably 95 mol% or more) of the dicarboxylic acid-derived structural units are derived from dodecanedioic acid and/or tetradecanedioic acid (preferably dodecanedioic acid). Dodecanedioic acid and a xylylenediamine may be raw materials derived from organisms (biomass raw materials).

Furthermore, in the above-described embodiment, it is preferable that from 20 to 100 mol% of the diamine unit is derived from m-xylylenediamine and from 80 to 0 mol% is derived from p-xylylenediamine, and it is more preferable that from 55 to 80 mol% of the diamine unit is derived from m-xylylenediamine and from 45 to 20 mol% is derived from p-xylylenediamine.

Examples of the dicarboxylic acid component other than the α,ω-linear aliphatic dicarboxylic acid having from 11 to 20 carbon atoms can include phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

The xylylenediamine-based polyamide resin used in the present embodiment includes a diamine-derived structural unit and a dicarboxylic acid-derived structural unit as main components, but structural units other than these are not entirely excluded. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. As used herein, the term "main components" indicates that, of the structural units constituting the xylylenediamine-based polyamide resin, the total number of the diamine-derived structural units and the dicarboxylic acid-derived structural units is the largest among all the structural units. In the present embodiment, the total of the diamine-derived structural units and the dicarboxylic acid-derived structural units in the xylylenediamine-based polyamide resin preferably accounts for 90 mass% or more, more preferably 95 mass% or more, still more preferably 97 mass% or more, and even more preferably 99 mass% or more of all the structural units.

The xylylenediamine-based polyamide resin used in the present embodiment has a relative viscosity of from 1.6 to 2.4. Setting the viscosity to equal to or more than the lower limit described above tends to increase the crystallization rate of the polyamide resin. In addition, setting the viscosity equal to or less than the upper limit described above can improve the fluidity of the reinforcing fibers in the resin composition and the appearance of the molded article.

The relative viscosity of the xylylenediamine-based polyamide resin used in the present embodiment is preferably 1.7 or more, more preferably 1.8 or more, still more preferably 1.9 or more, and even more preferably 2.0 or more. In addition, the relative viscosity of the xylylenediamine-based polyamide resin is preferably 2.3 or less, and more preferably 2.2 or less.

As a means for lowering the relative viscosity of the xylylenediamine-based polyamide resin, for example, the molar ratio of the raw material diamine to the raw material dicarboxylic acid in synthesizing the xylylenediamine-based polyamide resin is not 1 : 1, but the dicarboxylic acid or the diamine is used in a slightly excessive amount.

The relative viscosity of the xylylenediamine-based polyamide resin is measured in accordance with description in Examples below.

In the present embodiment, a difference between a terminal amino group concentration and a terminal carboxyl group concentration of the xylylenediamine-based polyamide resin ( | terminal amino group concentration - terminal carboxyl group concentration | ) is preferably 10 µmol/g or more. The | terminal amino group concentration - terminal carboxyl group concentration | is preferably 20 µmol/g or more, more preferably 30 µmol/g or more, and still more preferably 40 µmol/g or more, and is preferably 170 µmol/g or less, more preferably 80 µmol/g or less, still more preferably 70 µmol/g or less, and even more preferably 60 µmol/g or less.

Of the terminal amino group concentration and the terminal carboxyl group concentration of the xylylenediamine-based polyamide resin used in the present embodiment, the terminal group concentration having a lower concentration is preferably 80 µmol/g or less. Setting such a terminal group concentration tends to increase the crystallization rate. The terminal group concentration having a lower concentration of the xylylenediamine-based polyamide resin is more preferably 70 µmol/g or less, still more preferably 60 µmol/g or less, even more preferably 50 µmol/g or less, and even still more preferably 45 µmol/g or less. Also, the lower limit of the terminal group concentration having a lower concentration of the xylylenediamine-based polyamide resin is preferably 10 µmol/g or more, more preferably 15 µmol/g or more, still more preferably 20 µmol/g or more, even more preferably 25 µmol/g or more, and even still more preferably 30 µmol/g or more. With the terminal group concentration having a lower concentration of the xylylenediamine-based polyamide resin not lower than the lower limit described above, the appearance of the obtained molded article tends to be further improved.

Of the terminal amino group and the terminal carboxyl group of the xylylenediamine-based polyamide resin, the terminal group having a lower terminal group concentration is preferably the terminal amino group.

The terminal group concentration of the xylylenediamine-based polyamide resin is measured in accordance with the description in Examples below.

The xylylenediamine-based polyamide resin used in the present embodiment preferably has a melting point of 180°C or higher and more preferably 200°C or higher, and preferably has a melting point of 280°C or lower and more preferably 240°C or lower.

The lower limit of a number average molecular weight (Mn) of the xylylenediamine-based polyamide resin used in the present embodiment is preferably 6000 or more, more preferably 8000 or more, and still more preferably 10000 or more, and is preferably 35000 or less, more preferably 30000 or more, and still more preferably 25000 or less. The polyamide with a number average molecular weight in such a range provides better thermal resistance, elastic modulus, dimensional stability, and molding processability.

The content of the xylylenediamine-based polyamide resin used in the present embodiment in the resin composition of the present embodiment is preferably 40 mass% or more, more preferably 50 mass% or more, still more preferably 60 mass% or more, and even more preferably 64 mass% or more of the resin composition, and may be 68 mass% or more. With the content not lower than the lower limit, the surface appearance tends to be favorable. The content of the xylylenediamine-based polyamide resin used in the present embodiment in the resin composition of the present embodiment is preferably 95 mass% or less, more preferably 90 mass% or less, still more preferably 85 mass% or less, and even more preferably 80 mass% or less of the resin composition. Setting the content not more than the upper limit tends to increase the crystallization rate.

The resin composition of the present embodiment may contain only one type of xylylenediamine-based polyamide resin used in the present embodiment, or may contain two or more types thereof. When two or more types of xylylenediamine-based polyamide resins are contained, the total amount thereof preferably falls within the above-described range.

The resin composition of the present embodiment may contain a polyamide resin other than the xylylenediamine-based polyamide resin used in the present embodiment in a range not departing from the scope of the present invention.

The other polyamide resin is not particularly specified, and a known polyamide resin can be used. The polyamide resin may be an aliphatic polyamide resin or a semi-aromatic polyamide resin.

Examples of the aliphatic polyamide resin include polyamide 4, polyamide 46, polyamide 6, polyamide 66, polyamide 666, polyamide 610, polyamide 612, polyamide 11, and polyamide 12.

Examples of the semi-aromatic polyamide resin include terephthalic acid-based polyamide resins (polyamide 6T, polyamide 9T, polyamide 10T, and polyamide 6I6T) and polyamide resins composed of a xylylenediamine and an α,ω-linear aliphatic dicarboxylic acid having less than 10 carbon atoms (MXD6, MP6, and the like).

When these other polyamide resins are contained, they are preferably contained in a proportion of from 0.1 to 10 mass%, and more preferably from 0.1 to 5 mass% of the resin composition.

In the resin composition of the present embodiment, the total of the xylylenediamine-based polyamide resin and the reinforcing fibers used in the present embodiment accounts for preferably 90 mass% or more, more preferably 92 mass% or more, and still more preferably 94 mass% or more of the resin composition.

### Reinforcing Fiber

The resin composition of the present embodiment contains reinforcing fibers at a proportion of from 10 to 300 parts by mass with respect to 100 parts by mass of the xylylenediamine-based polyamide resin used in the present embodiment. The inclusion of the reinforcing fibers can improve the mechanical strength of the obtained molded article.

Examples of reinforcing fibers include carbon fibers and glass fibers, and glass fibers are preferably contained.

The reinforcing fibers in the present embodiment mean a fibrous inorganic material, and more specifically, a chopped shape in which from 1000 to 10000 reinforcing fibers are bundled and cut to a predetermined length is preferable.

A number average fiber length of the reinforcing fibers in the present embodiment is preferably from 0.5 to 10 mm, and more preferably from 1 to 5 mm. When the reinforcing fibers having such a number average fiber length are used, it is possible to further improve the mechanical strength. The number average fiber length is calculated from measured values obtained by randomly extracting reinforcing fibers whose fiber lengths are to be measured on an image obtained by observation with an optical microscope and measuring the long sides of the fibers. The observation magnification is 20 times, and the number of measured fibers is 1000 or more. In general, the number average fiber length corresponds to the cut length.

The cross-section of each of the reinforcing fibers may be any shape such as circular, elliptical, oval, rectangular, a shape obtained by combining semicircles with both short sides of a rectangle, or a cocoon shape, and is preferably circular. The term "circular" used herein includes not only a circle in a mathematical sense, but also what is commonly referred to as a circle in the technical field of the present embodiment.

In the reinforcing fibers, the lower limit of a number average fiber diameter is preferably 4.0 µm or more, more preferably 4.5 µm or more, and still more preferably 5.0 µm or more. In the reinforcing fibers, the upper limit of the number average fiber diameter is preferably 15.0 µm or less, and more preferably 12.0 µm or less. When the reinforcing fibers having a number average fiber diameter in such a range are used, a resin molded article having more excellent plating properties even after being subjected to moist heat can be obtained. Furthermore, even in a case where the resin molded article is stored for a long period of time or is heat-treated for a long period of time, high plating properties can be maintained. Note that the number average fiber diameter of the reinforcing fibers is calculated from measured values obtained by randomly extracting glass fibers whose fiber diameters are to be measured on an image obtained by observation with an electron microscope and measuring the fiber diameter of each of the glass fibers at a position close to the central portion thereof. The observation magnification is 1000 times, and the number of measured fibers is 1000 or more. The number average fiber diameter of the glass fiber having a cross section other than a circular cross section is a number average fiber diameter obtained by conversion into a circle having the same area as that of the cross section.

Next, the glass fibers preferably used in the present embodiment are described.

As the glass fibers, fibers obtained by melt-spinning commonly supplied glass such as E glass (Electrical glass), C glass (Chemical glass), A glass (Alkali glass), S glass (High strength glass), D glass, R glass, or alkali resistant glass are used.

The glass fibers used in the present embodiment are preferably surface-treated with a surface treatment agent, such as a silane coupling agent, such as γ-methacryloxypropyltrimethoxysilane, γ-glycidoxypropyltrimethoxysilane, and γ-aminopropyltriethoxysilane. The deposition amount of the surface treatment agent is preferably from 0.01 to 1 mass% of the glass fibers. Furthermore, optionally, glass fibers surface-treated with a lubricant, such as a fatty acid amide compound and a silicone oil; an antistatic agent, such as a quaternary ammonium salt; a resin having film-forming ability, such as an epoxy resin and a urethane resin; or a mixture containing components, such as a resin having film-forming ability, a thermal stabilizer, and a flame retardant; can also be used.

The content of the reinforcing fibers (preferably the glass fibers) in the resin composition of the present embodiment is, with respect to 100 parts by mass of the xylylenediamine-based polyamide resin, 10 parts by mass or more, preferably 15 parts by mass or more, more preferably 20 parts by mass or more, and still more preferably 30 parts by mass or more, and may be 40 parts by mass or more. With the content not lower than the above-described lower limit, the mechanical strength of the obtained resin molded article tends to be further improved. In addition, the content of the reinforcing fibers (preferably the glass fibers) in the resin composition of the present embodiment is, with respect to 100 parts by mass of the xylylenediamine-based polyamide resin, 300 parts by mass or less, preferably 280 parts by mass or less, more preferably 250 parts by mass or less, still more preferably 200 parts by mass or less, even more preferably 150 parts by mass or less, and even still more preferably 100 parts by mass or less, and may be 90 parts by mass or less.

The content of the reinforcing fibers (preferably the glass fibers) in the resin composition of the present embodiment is, in the resin composition, preferably 10 mass% or more, more preferably 15 mass% or more, and still more preferably 20 mass% or more, and may be 25 mass% or more. With the content not lower than the above-described lower limit, the mechanical strength of the obtained resin molded article tends to be further improved. The content of the reinforcing fibers (preferably the glass fibers) in the resin composition of the present embodiment is preferably 50 mass% or less and more preferably 40 mass% or less, and may be 35 mass% or less, in the resin composition. With the content not more than the upper limit value described above, the appearance of the obtained molded article tends to be further improved.

The resin composition of the present embodiment may contain only one type of reinforcing fibers, or may contain two or more types of reinforcing fibers. In a case where two or more types of reinforcing fibers are contained, the total amount thereof preferably falls within the above-described range.

### Impact Resistance Modifying Material

The resin composition of the present embodiment may contain an impact resistance modifying material.

As the impact resistance modifying material, a wide variety of impact resistance modifying materials that can be blended in a thermoplastic resin can be used.

One example of the impact resistance modifying material is polyolefin, and preferably an acid-modified polyolefin. When an acid-modified polyolefin is used, the crystallization rate can be increased.

The acid-modified polyolefin used in the present embodiment is obtained by, for example, acid-modifying a polyolefin. Acid modification refers to reaction of an acid derivative with a polyolefin in some manner. Specifically, the acid-modified polyolefin used in the present embodiment is obtained by grafting an acid derivative to the main chain of a polyolefin or by incorporating the acid derivative into the main chain of the polyolefin. In the present embodiment, the polyolefin is preferably a graft polymer in which an acid derivative is grafted to the main chain of the polyolefin.

The acid derivative is preferably an acid or an acid anhydride, more preferably an unsaturated carboxylic acid or an anhydride of an unsaturated carboxylic acid, and still more preferably an anhydride of an unsaturated carboxylic acid. The unsaturated carboxylic acid is preferably an unsaturated dicarboxylic acid, and an anhydride of the unsaturated carboxylic acid is also preferably an anhydride of the unsaturated dicarboxylic acid.

As the acid derivative, maleic acid, maleic anhydride, itaconic acid, itaconic anhydride, 5-norbornene-2,3-dicarboxylic acid, 5-norbornene-2,3-dicarboxylic anhydride, endic acid, endic anhydride, citraconic acid, citraconic anhydride, 1-butene-3,4-dicarboxylic acid, and 1-butene-3,4-dicarboxylic anhydride are more preferable, maleic acid and maleic anhydride are still more preferable, and maleic anhydride is even more preferable.

The method of modifying the copolymer with the acid derivative can be carried out by a known technique and is not particularly limited. For example, a method of copolymerizing the acid derivative and a monomer which is a raw material of the copolymer, a method of grafting the acid derivative to the copolymer, or the like can be used.

Note that in the resin composition of the present embodiment, the xylylenediamine-based polyamide resin may be bonded to the acid-modified polyolefin.

The acid-modified polyolefin is preferably obtained by acid-modifying a copolymer containing a structural unit derived from ethylene and a structural unit derived from an α-olefin having from 3 to 20 carbon atoms with an acid derivative. Through such a configuration, the impact resistance can be more effectively improved.

As the α-olefin having from 3 to 20 carbon atoms, an α-olefin having from 3 to 10 carbon atoms is preferable, an α-olefin having from 3 to 8 carbon atoms is more preferable, an α-olefin having from 3 to 5 carbon atoms is still more preferable, and an α-olefin having 3 or 4 carbon atoms is even more preferable. Specific examples of the α-olefin having from 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene, and propylene and 1-butene are preferred.

The copolymer containing the structural unit derived from ethylene and the structural unit derived from an α-olefin having from 3 to 20 carbon atoms may contain only one type of repeating unit derived from an α-olefin having from 3 to 20 carbon atoms, or may contain two or more types of repeating units derived from an α-olefin having from 3 to 20 carbon atoms. The copolymer may be a random copolymer or a block copolymer.

The copolymer contains the structural unit derived from an α-olefin having from 3 to 20 carbon atoms in a proportion of preferably from 6 to 25 mol%, more preferably from 8 to 22 mol%, and still more preferably from 10 to 20 mol%, of all structural units. Through such a configuration, the impact resistance can be more effectively improved.

In addition, the copolymer contains the structural unit derived from ethylene in a proportion of preferably from 94 to 75 mol%, more preferably from 92 to 78 mol%, and still more preferably from 90 to 80 mol%, of all the structural units.

Furthermore, the copolymer may contain a structural unit other than the structural unit derived from ethylene and the structural unit derived from the α-olefin having from 3 to 20 carbon atoms. In a case where the acid-modified polyolefin used in the present embodiment contains another structural unit, the content thereof is preferably in a range of 10 mol% or less of all the structural units of the copolymer.

Specific examples of the copolymer include an ethylene/propylene copolymer, an ethylene/butene copolymer, an ethylene/hexene copolymer, an ethylene/propylene/dicyclopentadiene copolymer, and an ethylene/propylene/5-ethylidene-2-norbornene copolymer, and an ethylene/butene copolymer is preferable.

An example of the acid-modified polyolefin used in the present embodiment is a maleic anhydride-modified polyolefin, and preferably a maleic anhydride-modified ethylene/propylene copolymer, ethylene/butene copolymer, ethylene/hexene copolymer, ethylene/propylene/dicyclopentadiene copolymer, or ethylene/propylene/5-ethylidene-2-norbornene copolymer.

The acid modification rate in the acid-modified polyolefin used in the present embodiment is preferably 0.3 mass% or more, more preferably 0.4 mass% or more, still more preferably 0.5 mass% or more, even more preferably 0.6 mass% or more, even still more preferably 0.8 mass% or more, and particularly more preferably 0.9 mass% or more. With such a range, the impact resistance can be more effectively improved. On the other hand, the upper limit value of the acid modification rate is preferably 4.0 mass% or less, more preferably 3.5 mass% or less, still more preferably 3.0 mass% or less, and even more preferably 2.5 mass% or less. Setting the acid modification rate to the upper limit value described above or less tends to improve dispersibility of the acid-modified polyolefin.

Note that the modification rate by the acid derivative (acid modification rate) in the present embodiment is measured in accordance with the description in paragraph 0056 of JP 2018-087319 A.

Examples of commercially available products of the acid-modified polyolefin used in the present embodiment include TAFMER (trade name, graft polymer) available from Mitsui Chemicals, Inc., Fusabond (trade name) available from DuPont, and Amplify (trade name) available from Dow Chemical Company.

When a polyolefin is contained, the content of the polyolefin in the resin composition of the present embodiment is, with respect to 100 parts by mass of the xylylenediamine-based polyamide resin, preferably 0.1 parts by mass or more and more preferably 1 part by mass or more, and is preferably 15 parts by mass or less and more preferably 10 parts by mass or less.

The resin composition of the present embodiment may contain only one type of polyolefin or may contain two or more types of polyolefins. When two or more types of polyolefins are contained, the total amount thereof preferably falls within the above-described range.

### Crystallization Promoting Aid

The resin composition of the present embodiment may contain a crystallization promoting aid. When the crystallization promoting aid is contained, the molding cycle of the resin composition can be further improved, and the crystallization rate of the resin composition can be increased.

An example of the crystallization promoting aid is a nucleating agent.

The nucleating agent may be either an organic nucleating agent or an inorganic nucleating agent, but an inorganic nucleating agent is preferred. Examples of the inorganic nucleating agent include graphite, molybdenum disulfide, barium sulfate, talc, mica, calcium carbonate, sodium phosphate, boron nitride, and kaolin. It is preferable to contain one or more selected from talc, mica, calcium carbonate, and boron nitride, more preferable to contain one or more selected from talc and calcium carbonate, and still more preferable to contain talc.

When the resin composition of the present embodiment contains a nucleating agent, the content of the nucleating agent is, with respect to 100 parts by mass of the xylylenediamine-based polyamide resin, preferably 0.1 parts by mass or more and more preferably 0.2 part by mass or more, and is preferably 10 parts by mass or less, more preferably 5 parts by mass or less, and still more preferably 3 parts by mass or less.

Another example of the crystallization promoting aid is a carbon material. Examples of the carbon material include carbon black and carbon nanotube.

In a case where the resin composition of the present embodiment contains a carbon material, the content of the carbon material is, with respect to 100 parts by mass of the xylylenediamine-based polyamide resin, preferably 0.1 parts by mass or more and more preferably 0.2 parts by mass or more, and is preferably 10 parts by mass or less, more preferably 5 parts by mass or less, and still more preferably 3 parts by mass or less.

The resin composition of the present embodiment may contain only one type of crystallization promoting agent or may contain two or more types of crystallization promoting agents.

### Other Components

The resin composition of the present embodiment may contain other components without departing from the scope of the present invention. Examples of such additives include plasticizers, mold releasing agents, light stabilizers, antioxidants, UV absorbers, fluorescent brighteners, anti-dropping agents, antistatic agents, antifogging agents, anti-blocking agents, fluidity improvers, plasticizers, hydrolysis resistance improvers, dispersants, antibacterial agents, flame retardants, and copper compounds.

Note that in the resin composition of the present embodiment, the contents of the xylylenediamine-based polyamide resin, the reinforcing fibers, and other additives are adjusted in such a manner that the total of the components is 100 mass%.

### Physical Properties of Resin Composition

The resin composition of the present embodiment preferably has a high flexural modulus. Specifically, the resin composition of the present embodiment is molded into an ISO multipurpose dumbbell test piece (4 mm thick), and the flexural modulus is measured at a temperature of 23°C in accordance with ISO 178. The flexural modulus is preferably more than 6.0 GPa, more preferably more than 6.5 GPa, still more preferably more than 7.0 GPa, and even more preferably more than 7.5 GPa. The upper limit value of the flexural modulus is not particularly determined, but 10.0 GPa or less is practical.

The resin composition of the present embodiment preferably has a high crystallization rate. Specifically, when the resin composition of the present embodiment is molded into an injection-molded piece having a thickness of 1 mmt at a mold temperature of 100°C and crystallized, the molding cycle time is preferably 50 seconds or shorter.

Details of methods for measuring these physical properties are in accordance with methods described in Examples below.

### Method for Producing Resin Composition

The method for producing a resin composition according to the present embodiment is not particularly limited, but is preferably a method in which a single-screw or twin-screw extruder having a facility capable of devolatilizing from a vent port is used as a kneader. The xylylenediamine-based polyamide resin, the reinforcing fibers, and optionally blended other additives may be collectively supplied to the kneader, or the polyamide resin component may be supplied and then the other components to be blended may be sequentially supplied. Further, two or more components selected from all components may be mixed and kneaded in advance. In particular, the reinforcing fibers are preferably side-fed.

The production method of a molded article obtained using the resin composition of the present embodiment is not particularly limited, and a molding method commonly used for thermoplastic resins, that is, a molding method such as injection molding, hollow molding, extrusion molding, or press molding can be applied. In this case, injection molding is particularly preferable because of good fluidity. In injection molding, the resin temperature is preferably controlled at 200 to 310°C.

### Applications

The molded article of the present embodiment is formed from the resin composition of the present embodiment.

The molded article of the present embodiment can be widely used as an extrusion-molded article or an injection-molded article.

The molded article of the present embodiment can also be applied to various storage containers, electric/electronic equipment parts, precision equipment parts, office automation (OA) equipment parts, household electrical appliance parts, mechanical mechanism parts, vehicle mechanism parts, and the like. In particular, the molded article of the present embodiment is suitable for connectors, tanks, ski boots, hydrogen tanks, and the like because it has high strength, high impact resistance, high chemical resistance, and low water absorption rate, and can reduce an amount of eluate. In addition, in-mold crystallization at a low temperature is possible, and thus it is also suitable for use in two-color molding with a resin having a relatively low melting point such as polyethylene.

### Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

### 1. Raw Material

The following polyamide resins were used.

### Synthesis Example 1: Synthesis of MP12 (30) (relative viscosity of 2.1)

In a jacketed reactor equipped with an agitator, a partial condenser, a cooler, a thermometer, a dripping tank, and a nitrogen gas introduction tube, precisely weighed 59.60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP12 (30)) had a melting point of 206°C and a relative viscosity of 2.1.

### Synthesis Example 2: Synthesis of MP12 (40)

In a jacketed reactor equipped with an agitator, a partial condenser, a cooler, a thermometer, a dripping tank, and a nitrogen gas introduction tube, precisely weighed 59.60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60.00 mol of p/m-xylylenediamine containing a diamine component in which 40 mol% was p-xylylenediamine and 60 mol% was m-xylylenediamine was added dropwise over 160 minutes while agitation was performed. At this time, the internal pressure of the reaction system was at normal pressure, and the internal temperature was continuously increased to 250°C. The water that distilled out along with the dropwise addition of the p/m-xylylenediamine was removed from the system through the partial condenser and the cooler. After completion of the dropwise addition of the p/m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP12 (40)) had a melting point of 216°C and a relative viscosity of 2.1.

### Synthesis Example 3: Synthesis of PXD12

In a jacketed reactor equipped with an agitator, a partial condenser, a cooler, a thermometer, a dripping tank, and a nitrogen gas introduction tube, precisely weighed 59.60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60.00 mol of p-xylylenediamine was added dropwise over 160 minutes while agitation was performed. During this, the internal pressure of the reaction system was at normal pressure, and the internal temperature was continuously raised to 290°C. The water that distilled out along with the dropwise addition of the p-xylylenediamine was removed from the system through the partial condenser and the cooler. After completion of the dropwise addition of the p-xylylenediamine, the liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (PXD12) had a melting point of 269°C and a relative viscosity of 2.1.

### Synthesis Example 4: Synthesis of MXD12

In a jacketed reactor equipped with an agitator, a partial condenser, a cooler, a thermometer, a dripping tank, and a nitrogen gas introduction tube, precisely weighed 59.60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60.00 mol of m-xylylenediamine was added dropwise over 160 minutes while agitation was performed. During this, the internal pressure of the reaction system was at normal pressure, and the internal temperature was continuously raised to 230°C. The water that distilled out along with the dropwise addition of the m-xylylenediamine was removed from the system through the partial condenser and the cooler. After completion of the dropwise addition of the m-xylylenediamine, the liquid temperature of 230°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 240°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MXD12) had a melting point of 186°C and a relative viscosity of 2.1.

### Synthesis Example 5: Synthesis of MP14 (30)

In a jacketed reactor equipped with an agitator, a partial condenser, a cooler, a thermometer, a dripping tank, and a nitrogen gas introduction tube, precisely weighed 59.60 mol of 1,14-tetradecanedioic acid was placed, then the reactor was sufficiently purged with nitrogen and the temperature was raised to 180°C under a small amount of nitrogen gas stream, and thus the 1,14-tetradecanedioic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP14 (30)) had a melting point of 200°C and a relative viscosity of 2.1.

### Synthesis Example 6: Synthesis of MP12 (30) (relative viscosity of 1.8)

In a jacketed reactor equipped with an agitator, a partial condenser, a cooler, a thermometer, a dripping tank, and a nitrogen gas introduction tube, precisely weighed 58.50 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP12 (30)) had a melting point of 206°C and a relative viscosity of 1.8.

### Synthesis Example 7: Synthesis of MP12 (30) (relative viscosity of 2.5)

In a jacketed reactor equipped with an agitator, a partial condenser, a cooler, a thermometer, a dripping tank, and a nitrogen gas introduction tube, precisely weighed 60.00 mol of 1,12-dodecanedioic acid was placed, then the reactor was sufficiently purged with nitrogen and the temperature was increased to 180°C under a small amount of nitrogen gas stream, and thus the 1,12-dodecanedioic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP12 (30)) had a melting point of 206°C and a relative viscosity of 2.5.

### Synthesis Example 8: Synthesis of MP10 (30) (relative viscosity of 2.5)

In a jacketed reactor equipped with an agitator, a partial condenser, a cooler, a thermometer, a dripping tank, and a nitrogen gas introduction tube, precisely weighed 60.00 mol of sebacic acid was placed, then the reactor was sufficiently purged with nitrogen and the temperature was raised to 180°C under a small amount of nitrogen gas stream, and thus the sebacic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 250°C. The water that distilled out along with the dropwise addition of the p-xylylenediamine was removed from the system through the partial condenser and the cooler. After completion of the dropwise addition of the p-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP10) had a melting point of 215°C and a relative viscosity of 2.5.

### Synthesis Example 9: Synthesis of MP10 (30) (relative viscosity of 2.1)

In a jacketed reactor equipped with an agitator, a partial condenser, a cooler, a thermometer, a dripping tank, and a nitrogen gas introduction tube, precisely weighed 59.60 mol of sebacic acid was placed, then the reactor was sufficiently purged with nitrogen and the temperature was raised to 180°C under a small amount of nitrogen gas stream, and thus the sebacic acid was dissolved to form a uniformly fluidized state. To this, 60.00 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 250°C. The water that distilled out along with the dropwise addition of the p-xylylenediamine was removed from the system through the partial condenser and the cooler. After completion of the dropwise addition of the p-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The obtained polyamide resin (MP10 (30)) had a melting point of 215°C and a relative viscosity of 2.1.

PA12: Polyamide 12, available from Ube Industries, Ltd., product number: UBESTA 3024U
PA6: Polyamide 6, available from Ube Industries, Ltd., product number: UBE Nylon 1022B

### Measurement Method of Relative Viscosity

The relative viscosity of the polyamide resin was measured in accordance with JIS K 6933:2013 (ISO 307:2007).

### Terminal Amino Group Concentration (µmol/g)

(a) Terminal amino group concentration ([NH₂] µmol/g)
   0.2 to 0.5 g of the polyamide resin was precisely weighed, and was dissolved in 30 mL of phenol/ethanol = 4/1 volume solution while agitation was performed. After the polyamide was completely dissolved, the terminal amino group concentration was determined by neutralization titration with N/100 hydrochloric acid.
(b) Terminal carboxyl group concentration ([COOH] µmol/g)
   0.2 to 0.5 g of the polyamide resin was precisely weighed, and the polyamide was dissolved in 30 mL of benzyl alcohol at 160 to 180°C under a nitrogen gas stream while agitation was performed. After the polyamide was completely dissolved, the solution was cooled to 80°C under a nitrogen gas stream, 10 mL of methanol was added while agitation was performed, and the terminal carboxyl group concentration was determined by neutralization titration with N/100 sodium hydroxide aqueous solution.

The following reinforcing fibers and polyolefin were used.
Reinforcing fibers: T-275GH, available from Nippon Electric Glass Co., Ltd., glass fibers
Impact resistance modifying material: TAFMER MH5020, maleic anhydride-modified ethylene-butene copolymer, available from Mitsui Chemicals, Inc., maleic anhydride modification rate: 1.0 mass%

### 2. Examples 1 to 11, Comparative Examples 1 to 5

### Compound

The components were weighed and blended in a tumbler to attain the compositions indicated in Tables 1 to 3 below, and then the mixture was fed from the screw root of a twin-screw extruder (available from Shibaura Machine Co., Ltd., TEM26SS). The glass fibers were fed into the twin-screw extruder from the side of the extruder using a vibratory cassette weighing feeder (CE-V-1B-MP, available from Kubota Corporation), and melt-kneaded with the resin components and the like to obtain pellets of the resin composition. The temperature of the twin-screw extruder was set to 240 to 280°C.

### Molding Cycle

The pellets obtained by the above-described production method were dried at 120°C for 4 hours, and then injection-molded into three-stage plates by an injection-molding machine ("NEX140III" available from Nissei Plastic Industrial Co., Ltd.) under the conditions: a cylinder temperature of 200 to 300°C and a mold temperature of 100°C.

It can be said that a shorter molding cycle indicates a higher crystallization rate.

Evaluation was made as follows.
5: The molding cycle time is 50 seconds or shorter in a case where a molded piece having a thickness of a three-stage plate of 1 mmt is crystallized in the mold
1: The molding cycle time is longer than 50 seconds in a case where a molded piece having a thickness of a three-stage plate of 1 mmt is crystallized in the mold

### Appearance

The pellets obtained by the above-described production method were dried at 120°C for 4 hours, and then injection-molded into three-stage plates by an injection-molding machine ("NEX140III" available from Nissei Plastic Industrial Co., Ltd.) under the conditions: a cylinder temperature of 200 to 300°C, a mold temperature of 100°C, and a molding cycle of 50 seconds. The criterion of "3: Appearance of molded piece having a thickness of 1 mmt is good" was set as Example 10, and five experts made judgment by a majority vote.

Evaluation was made as follows.
5: Appearance of molded piece having a thickness of 1 mmt is very good
3: Appearance of molded piece having a thickness of 1 mmt is good
1: Appearance of molded piece having a thickness of 1 mmt is bad

### Flexural Modulus

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The flexural modulus (unit: GPa) was measured at a temperature of 23°C in accordance with ISO 178.

Evaluation was made as follows.
5: More than 7.5 GPa
4: More than 7.0 GPa and 7.5 GPa or less
3: More than 6.5 GPa and 7.0 GPa or less
2: More than 6.0 GPa and 6.5 GPa or less
1: 6.0 GPa or less

### Impact Resistance

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The Charpy impact strength (unnotched, unit: kJ/m²) was measured at a temperature of 23°C in accordance with the ISO 179 standard.

Evaluation was made as follows.
5: More than 60 kJ/m²
4: More than 55 kJ/m² and 60 kJ/m² or less
3: More than 50 kJ/m² and 55 kJ/m² or less
2: More than 45 kJ/m² and 50 kJ/m² or less
1: More than 45 kJ/m²

### Gas Barrier Property

The pellets obtained by the above-described production method were dried at 120°C for 4 hours, and then injection-molded into flat plate test pieces (2 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

15 cc of a mixed solvent of toluene (45 vol%), isooctane (45 vol%), and ethanol (10 vol%) was placed in a Φ38-mm cup made of aluminum, the flat test piece was placed on a packing, and an aluminum lid having a hole of the same size as the packing and the mouth portion of the cup was attached thereto and fastened with screws.

The gas permeability coefficient (g·mm/m²·day) was calculated from a weight change before and after storage in a thermostatic chamber at 60°C for 1000 hours.

Gas permeability coefficient (g·mm/m²·day) = [(mass before storage - mass after storage) × (thickness of test piece)]/[(area of mouth portion of aluminum cup) × (number of days of storage)]

Evaluation was made as follows.
5: 2 (g·mm/m²·day) or less
4: More than 2 (g·mm/m²·day) and 4 (g·mm/m ²·day) or less
3: More than 4 (g·mm/m²·day) and 6 (g·mm/m ²·day) or less
2: More than 6 (g·mm/m²·day) and 10 (g·mm/m²·day) or less
1: More than 10 (g·mm/m²·day)

### Amount of Eluate

The pellets obtained by the above-described production method were dried at 120°C for 4 hours, and then injection-molded into flat plate test pieces (2 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

15 cc of a mixed solvent of toluene (45 vol%), isooctane (45 vol%), and ethanol (10 vol%) was placed in a Φ38-mm cup made of aluminum, the flat test piece was placed on a packing, and an aluminum lid having a hole of the same size as the packing and the mouth portion of the cup was attached thereto and fastened with screws. The internal solution in the tested cup stored in a thermostatic chamber at 60°C for 1000 hours was filtered (filter paper: PTFE, pore diameter: 50 µm), and the mass of the obtained solid eluate was measured.

Evaluation was made as follows.
5: 1 mg or less
4: More than 1 mg and 3 mg or less
3: More than 3 mg and 6 mg or less
2: More than 6 mg and 10 mg or less
1: More than 10 mg

### Chemical Resistance

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The flexural modulus (unit: GPa) was measured at a temperature of 23°C in accordance with ISO 178.

The test piece was immersed in 10 mass% hydrochloric acid for 7 days, and the flexural modulus was measured again. The ratio (%) of the flexural modulus after immersion in hydrochloric acid to the initial flexural modulus was defined as a flexural modulus retention rate.

Evaluation was made as follows.
5: More than 80%
4: 70% or more and less than 80%
3: 60% or more and less than 70%
2: 50% or more and less than 60%
1: Less than 50%

### Water Absorption Rate

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The test piece was immersed in water for 120 days, and the ratio (%) of a difference between the mass after immersion in water and the initial mass to the initial mass was defined as a water absorption rate.

Water absorption rate (%) = [(mass after water immersion - initial mass)/initial mass] × 100

Evaluation was made as follows.
5: 1% or less
4: More than 1% and 2% or less
3: More than 2% and 3% or less
2: More than 3% and 4% or less
1: More than 4%

**[Table 1]**

| | Example 1 | Example 2 | Example 3 | Example 4 | Example 5 | Example 6 |
|---|---|---|---|---|---|---|
| Polyamide resin type | MP12 (30) | MP12 (30) | MP12 (40) | PXD12 | MXD12 | MP14 (30) |
| Relative viscosity of polyamide resin | 2.1 | 2.1 | 2.1 | 2.1 | 2.1 | 2.1 |
| Terminal amino group concentration (µmol/g) | 30 | 30 | 30 | 30 | 30 | 30 |
| Terminal carboxy group concentration (µmol/g) | 80 | 80 | 80 | 80 | 80 | 80 |
| Proportion of reinforcing fibers (mass%) | 30 | 30 | 30 | 30 | 30 | 30 |
| Type of impact resistance modifying material | - | MH5020 | - | - | - | - |
| Proportion (mass%) of impact resistance modifying material | - | 5 | - | - | - | - |
| Molding cycle | 5 | 5 | 5 | 5 | 5 | 5 |
| Appearance | 5 | 5 | 5 | 5 | 5 | 5 |
| Flexural modulus | 5 | 4 | 5 | 5 | 5 | 4 |
| Impact resistance | 4 | 5 | 4 | 4 | 3 | 3 |
| Gas barrier property | 5 | 5 | 5 | 5 | 5 | 3 |
| Eluate amount | 5 | 5 | 5 | 5 | 5 | 5 |
| Chemical resistance | 5 | 5 | 5 | 5 | 5 | 5 |
| Water absorption rate | 5 | 5 | 5 | 5 | 5 | 5 |

**[Table 2]**

| | Example 7 | Example 8 | Example 9 | Example 10 | Example 11 |
|---|---|---|---|---|---|
| Polyamide resin type | MP12 (30) | MP12 (30) | MP12 (30) | MP12 (30) | MP12 (30) |
| Relative viscosity of polyamide resin | 1.8 | 2.1 | 2.1 | 2.1 | 2.1 |
| Terminal amino group concentration (µmol/g) | 10 | 80 | 30 | 30 | 30 |
| Terminal carboxy group concentration (µmol/g) | 180 | 30 | 80 | 80 | 80 |
| Proportion of reinforcing fibers (mass%) | 30 | 30 | 20 | 50 | 60 |
| Type of impact resistance modifying material | - | - | - | - | - |
| Proportion (mass%) of impact resistance modifying material | - | - | - | - | - |
| Molding cycle | 5 | 5 | 5 | 5 | 5 |
| Appearance | 5 | 5 | 5 | 5 | 3 |
| Flexural modulus | 4 | 5 | 4 | 5 | 5 |
| Impact resistance | 3 | 4 | 5 | 5 | 4 |
| Gas barrier property | 5 | 5 | 5 | 5 | 5 |
| Eluate amount | 5 | 5 | 5 | 5 | 5 |
| Chemical resistance | 5 | 5 | 5 | 5 | 5 |
| Water absorption rate | 5 | 5 | 5 | 5 | 5 |

**[Table 3]**

| | Comparative Example 1 | Comparative Example 2 | Comparative Example 3 | Comparative Example 4 | Comparative Example 5 |
|---|---|---|---|---|---|
| Polyamide resin type | MP12 (30) | MP10 (30) | MP10 (30) | PA12 | PA6 |
| Relative viscosity of polyamide resin | 2.5 | 2.5 | 2.1 | | |
| Terminal amino group concentration (µmol/g) | 10 | 10 | 30 | 30 | 30 |
| Terminal carboxy group concentration (µmol/g) | 12 | 12 | 80 | 80 | 80 |
| Proportion of reinforcing fibers (mass%) | 30 | 30 | 30 | 30 | 30 |
| Type of impact resistance modifying material | - | - | - | - | - |
| Proportion (mass%) of impact resistance modifying material | - | - | - | - | - |
| Molding cycle | 5 | 1 | 1 | 5 | 5 |
| Appearance | 1 | 1 | 1 | 1 | 1 |
| Flexural modulus | 5 | 5 | 5 | 1 | 5 |
| Impact resistance | 4 | 3 | 3 | 5 | 1 |
| Gas barrier property | 5 | 5 | 5 | 1 | 5 |
| Eluate amount | 5 | 5 | 5 | 1 | 5 |
| Chemical resistance | 5 | 5 | 5 | 5 | 1 |
| Water absorption rate | 5 | 4 | 4 | 5 | 1 |

In Tables 1 to 3 above, the contents of the reinforcing fiber and the impact resistance modifying material are contents (mass%) of the reinforcing fiber and the impact resistance modifying material, respectively, when the total amount of the resin composition is 100 mass%.

As is clear from the above-described results, when the resin composition of the present invention was formed into a molded article, the molding cycle was short and the appearance of the obtained molded article was also excellent (Examples 1 to 10).

On the other hand, when the relative viscosity of the polyamide resin was high (Comparative Example 1), the appearance of the obtained molded article was inferior. In addition, in the case where the xylylenediamine-based polyamide resin (MP10) other than the predetermined xylylenediamine-based polyamide resin was used as the polyamide resin (Comparative Examples 2 and 3), the molding cycle was inferior regardless of the relative viscosity.

Furthermore, in the case where an aliphatic polyamide resin was used (Comparative Examples 4 and 5), the appearance of the obtained molded article was inferior.

## Claims

1. A resin composition, comprising from 10 to 300 parts by mass of reinforcing fibers with respect to 100 parts by mass of a xylylenediamine-based polyamide resin,
the xylylenediamine-based polyamide resin comprising a diamine unit and a dicarboxylic acid unit, the diamine unit comprising 70 mol% or more of structural units derived from a xylylenediamine, the dicarboxylic acid unit comprising 70 mol% or more of structural units derived from an α,ω-linear aliphatic dicarboxylic acid having from 11 to 20 carbon atoms, and
the xylylenediamine-based polyamide resin having a relative viscosity of from 1.6 to 2.4.

2. The resin composition according to claim 1, wherein 70 mol% or more of the dicarboxylic acid unit is derived from dodecanedioic acid and/or tetradecanedioic acid.

3. The resin composition according to claim 1, wherein 70 mol% or more of the dicarboxylic acid unit is derived from dodecanedioic acid.

4. The resin composition according to any one of claims 1 to 3, wherein from 20 to 100 mol% of the diamine unit is derived from m-xylylenediamine, and from 80 to 0 mol% of the diamine unit is derived from p-xylylenediamine.

5. The resin composition according to claim 1, wherein 70 mol% or more of the dicarboxylic acid unit is derived from dodecanedioic acid and/or tetradecanedioic acid, and
from 20 to 100 mol% of the diamine unit is derived from m-xylylenediamine, and from 80 to 0 mol% of the diamine unit is derived from p-xylylenediamine.

6. The resin composition according to any one of claims 1 to 5, wherein a difference between a terminal amino group concentration and a terminal carboxyl group concentration ( | terminal amino group concentration - terminal carboxyl group concentration | ) of the xylylenediamine-based polyamide resin is 10 µmol/g or more.

7. A molded article formed from the resin composition described in any one of claims 1 to 6.
